# EUROPÄISCHE PATENTSCHRIFT

(11) **EP 0 402 347 B1**
(45) Veröffentlichungstag und Bekanntmachung des Hinweises auf die Patenterteilung: **04.08.1993**
(21) Anmeldenummer: 90890170.5
(22) Anmeldetag: 31.05.1990
(51) Int. Cl.: B01J 39/04, C02F 1/42

(54) **Verfahren zur Abtrennung von Aminen**
Method of removing amines
Procédé pour l'élimination d'amines

(30) Priorität: 08.06.1989 AT 1415/89
(43) Veröffentlichungstag der Anmeldung: 12.12.1990
(73) Patentinhaber: Lenzing Aktiengesellschaft, A-4860 Lenzing (AT)
(72) Erfinder: Korger, Dietmar, A-4853 Steinbch 2 a/A (AT); Astegger, Stephan, Mag. Dr., A-4840 Vöcklabruck (AT); Eichinger, Dieter, Dipl.-Ing., Dr., A-4840 Vöcklabruck (AT); Firgo, Heinrich, Dipl.-Ing. Dr., A-4840 Vöcklabruck (AT)
(74) Vertreter: Müllner, Erwin, Dr.

(56) Entgegenhaltungen:
- EP-A- 0 149 792
- FR-A- 1 319 465
- FR-A- 2 257 624
- JOURNAL OF APPLIED CHEM. OF THE USSR, Band 52, Nr. 1, Teil 2, Januar 1979, Seiten 124-129, Plenum Publishing Corp.; T.L. YURKSHTOVICH et al.: "Ion-exchange sorption of lower aliphatic amines by oxycelluloses"

## Beschreibung

Die Erfindung betrifft ein Verfahren zur Abtrennung von Aminen aus ihren wässerigen Lösungen, insbesondere aus Abwässern, die bei bestimmten Verfahren der Celluloseverarbeitung anfallen.

Derartige Aminlösungen stellen ein Entsorgungsproblem dar, weil bis heute kein Verfahren bekannt ist, nach dem Amine in hoher Ausbeute und auf einfache Weise aus diesen Abwässern entfernt werden können. Bekanntlich sind viele Amine toxisch und schwer abbaubar.

In der Literatur sind zwar destillative Trennungsmethoden beschrieben. Bei Amin-Konzentrationen von 0,01 bis 5 Gew.% sind diese Verfahren aber mehrstufig, sehr aufwendig und damit unwirtschaftlich.

Auch Extraktionsverfahren wurden für die Trennung verschiedentlich versucht und mit einer nachfolgenden Destillation kombiniert. Ein solches Verfahren ist beispielsweise aus der GB-B - 1 073 582 bekannt. Allerdings können die Amine nach diesem Verfahren nicht vollständig entfernt werden.

In der Zeitschrift Khim. Prom-st. (Moskau) 1983(2), Seiten 83 bis 85 wird ein Verfahren zur vollständigen Abtrennung von Morpholin aus Abwässern beschrieben. Nach diesem Verfahren wird die Abtrennung mittels Ionenaustauscher durchgeführt. Der Nachteil dieses Verfahrens besteht darin, daß eine Mehrzahl von Ionentaustauschern, u.zw. zwei stark saure Kationenaustauscher in Kombination mit einem Anionenaustauscher, verwendet werden muß und daß die bei der Regenerierung anfallenden morpholinhältigen Eluate stark sauer sind und vor einer weiteren Aufarbeitung mit entsprechend großen Mengen Lauge neutralisiert werden müssen. Die dabei anfallenden Salze reißen jedoch beim Kristallisieren Morpholin mit, was wiederum den Nachteil hat, daß die Salze nicht direkt als Abfall deponiert werden können, sondern nur nach einer weiteren Regenerierung.

Die Erfindung setzt sich zum Ziel, diese Nachteile zu beseitigen und ein einfaches Verfahren zur Abtrennung von Aminen aus ihren wässerigen Lösungen zur Verfügung zu stellen, das ohne einen Neutralisierungsschritt und ohne energieaufwendige Trenn- bzw. Regenerierungsschritte kostengünstig durchgeführt werden kann.

Das erfindungsgemäße Verfahren ist gekennzeichnet durch die Kombination der Maßnahmen, daß
- die wässerigen Aminlösungen mit einem Kationenaustauscher in Kontakt gebracht werden, dessen Ankergruppen aus Carboxylgruppen bestehen, um den Kationenaustauscher mit den Aminen zu beladen,
- der beladene Kationenaustauscher mit einer wässerigen Lösung einer schwachen Säure mit einem pKₐ-Wert von größer als 3,0 behandelt wird, um die Amine zu eluieren, und
- das Eluat destillativ aufgearbeitet wird, wobei ein Teil der schwachen Säure von den Aminen getrennt und gegebenenfalls rückgewonnen wird.

Mit dem erfindungsgemäß verwendeten Ionenaustauscher können die Amine sowohl in einem einzigen Durchgang praktisch quantitativ erfaßt, als auch mit schwachen Säuren wieder eluiert werden. Als solche haben sich flüchtige Säuren mit einem Siedepunkt von weniger als 120°C, wie Ameisensäure, Essigsäure oder Kohlensäure, bewährt.

Eine vorteilhafte Ausführungsform des erfindungsgemäßen Verfahrens besteht darin, daß der pH-Wert der wässerigen Lösung der Säure zwischen 1,7 und 2,8 liegt.

Das Eluat, das die Amine, Säure und Wasser enthält, wird durch Destillation weiterverarbeitet, wobei das Destillat die Säure, Wasser und lediglich Spuren von Aminen enthält und in den Prozeß zurückgeführt werden kann. Es kann beispielsweise für die Spülung des Ionenaustauschers nach der Regenerierung verwendet werden. Weiters kann durch Zugabe von konzentrierter Säure eine frische Regenerierlösung hergestellt werden. Im Destillationsrückstand bleiben die Amine als Ammoniumsalze, beispielsweise Formiate und Acetate, mit Resten von Säure zurück. Die in konzentrierter Form vorliegenden Amine können nach verschiedenen in der Literatur beschriebenen Verfahren weiter aufgearbeitet, oder vorzugsweise durch vollständige Verbrennung entsorgt werden.

Mit den nachfolgenden Beispielen wird die Erfindung noch weiter beschrieben.

### Beispiel 1:

50 ml LEWATIT CNP 80 (Hersteller: Bayer AG) wurden mit 100 ml einer wässerigen Lösung, enthaltend 4,9 g N-Methylmorpholin (pH = 10,03), beladen. Die anschließende Eluierung erfolgte mit 200 ml 10 %iger Essigsäure. Das Eluat enthielt 4,6 g N-Methylmorpholin. Danach wurde der Ionenaustauscher mit 400 ml destilliertem Wasser gewaschen. Im Waschwasser wurden weitere 0,2 g N-Methylmorpholin gefunden.

Das Amin konnte damit zu 98 % aus der wässerigen Lösung abgetrennt und durch Verbrennen mühelos entsorgt werden. Das Destillat wurde zur Herstellung neuer Eluierlösungen verwendet.

### Beispiel 2:

50 ml LEWATIT CNP 80 wurden mit 500 ml eines Abwassers aus der Celluloseverarbeitung (pH = 10,31), enthaltend 0,15 Gew.% N-Methylmorpholin und Morpholin, beladen. Die Eluierung erfolgte mit 150 ml 10 %iger Essigsäure, worauf mit 300 ml destilliertem Wasser gewaschen wurde. Anschließend wurde destilliert, wobei aus 123 g Eluat (Essigsäurekonzentration: 4,7 %) 42,6 g Kondensat mit einer Essigsäurekonzentration von 3,3 % erhalten wurden. Der Destillationsrückstand setzte sich aus 5,5 % Essigsäure, 0,36 % Amin und Wasser zusammen. Durch Zugabe von Essigsäure wurde daraus die Eluierlösung für das nachfolgende Beispiel 3 hergestellt, wobei das Amin nicht störte.

Das Amin konnte zu 94 % aus dem Abwasser entfernt werden.

### Beispiel 3:

50 ml LEWATIT CNP 80 wurden mit 1000 ml eines Abwassers (pH = 9,88), enthaltend 2,86 g N-Methylmorpholin, beladen. Anschließend erfolgte die Eluierung mit dem in Beispiel 2 angefallenen Destillationsrückstand, der zuvor bis 10,4 % mit Essigsäure angereichert worden war. Die Aminkonzentration sank dadurch auf 1,54 %. Zur Eluierung wurden 148,2 g dieser Lösung benötigt. Es fielen 198,2 g Eluat an, das 6,09 % Essigsäure und 2,18 % Amin enthält. Selbst ohne Waschen konnten damit ca. 72 % des Amins eluiert werden.

Die Aufarbeitung und Entsorgung erfolgte gemäß Beispiel 1.

## Patentansprüche

1. Verfahren zur Abtrennung von Aminen aus wässerigen Lösungen, insbesondere aus Abwässern der Celluloseverarbeitung, wobei die wässerigen Aminlösungen mit einem Kationenaustauscher in Kontakt gebracht werden, dessen Ankergruppen aus Carboxylgruppen bestehen, um den Kationenaustauscher mit den Aminen zu beladen, und wobei der beladene Kationenaustauscher mit einer wässerigen Lösung einer schwachen Säure mit einem pKₐ-Wert von größer als 3,0 behandelt wird, um die Amine zu eluieren, dadurch gekennzeichnet, daß zur Eluierung eine schwache Säure eingesetzt wird, deren Siedepunkt unter 120 °C liegt und daß das Eluat destillativ aufgearbeitet wird, wobei ein Teil der schwachen Säure von den Aminen getrennt und gegebenenfalls rückgewonnen wird.

2. Verfahren nach Anspruch 1, dadurch gekennzeichnet, daß als schwache Säure Ameisensäure, Essigsäure oder Kohlensäure eingesetzt wird.

3. Verfahren nach Anspruch 1, dadurch gekennzeichnet, daß der pH-Wert der wässerigen Lösung der schwachen Säure zwischen 1,7 und 2,8 liegt.

## Claims

1. A method for the separation of amines from aqueous solutions, in particular from waste water of cellulose processing, in which the aqueous amine solutions are brought into contact with a cation exchanger, the anchor groups of which consist of carboxyl groups, in order to charge the cation exchanger with the amines, and in which the charged cation exchanger is treated with an aqueous solution of a weak acid with a pKₐ-value of greater than 3.0, in order to elutriate the amines, characterised in that for the elutriation a weak acid is used, the boiling point of which lies below 120 ° C and that the elutriate is worked up distillatively, in which a portion of the weak acid is separated from the amines and is recovered if necessary.

2. A method according to Claim 1, characterised in that as weak acid, formic acid, acetic acid or carbonic acid is used.

3. A method according to Claim 1, characterised in that the pH value of the aqueous solution of the weak acid lies between 1.7 and 2.8.

## Revendications

1. Procédé de séparation d'amines de solutions aqueuses, en particulier d'eaux résiduaires de traitement de cellulose, dans lequel les solutions aqueuses d'amines sont mises en contact avec un échangeur de cations, dont les groupes d'ancrage sont constitués de groupes carboxy pour charger l'échangeur de cations avec les amines, et dans lequel l'échangeur de cations chargé est traité par une solution aqueuse d'un acide faible ayant une valeur de Pka supérieure à 3,0, pour eluer l'amine, caractérisé en ce qu'on utilise pour l'élution un acide faible dont le point d'ébullition est inférieur à 120°C et en ce que l'éluat est traité par distillation, au cours de laquelle une partie de l'acide faible est séparée des amines et le cas échéant recyclée.

2. Un procédé selon la revendication 1, caractérisé en ce qu'on utilise en tant qu'acide faible de l'acide formique, de l'acide acétique ou de l'acide carbonique.

3. Un procédé selon la revendication 1, caractérisé en ce que la valeur du pH de la solution aqueuse de l'acide faible est comprise entre 1,7 et 2,8.
